# EUROPÄISCHE PATENTSCHRIFT

(11) **EP 1 401 262 B1**
(45) Veröffentlichungstag und Bekanntmachung des Hinweises auf die Patenterteilung: **27.07.2005**
(21) Anmeldenummer: 02740323.7
(22) Anmeldetag: 08.05.2002
(51) Int. Cl.: A01K 1/01

(54) **AUSMISTSYSTEM, AUSMISTSCHIEBER SOWIE DAZUGEHÖRIGES ARBEITSVERFAHREN**
MUCKING-OUT SYSTEM, MUCKING-OUT SLIDE AND ASSOCIATED OPERATING METHOD
SYSTEME D'ENLEVEMENT DU FUMIER, PLAQUE COULISSANTE D'ENLEVEMENT DU FUMIER ET PROCEDE D'UTILISATION Y RELATIF

(30) Priorität: 21.05.2001 DE 10124775
(43) Veröffentlichungstag der Anmeldung: 31.03.2004
(73) Patentinhaber: Reuver, Hermannus S.F., 21683 Butzflethermoor (DE)
(72) Erfinder: Reuver, Hermannus S.F., 21683 Butzflethermoor (DE)
(74) Vertreter: Hansen, Jochen
(86) Internationale Anmeldenummer: PCT/DE2002/001656
(87) Internationale Veröffentlichungsnummer: WO 2002/094010

(56) Entgegenhaltungen:
- DE-A- 2 400 321
- DE-A- 2 451 539
- FR-A- 2 750 443
- GB-A- 1 167 253
- DATABASE COMPENDEX [Online] ENGINEERING INFORMATION, INC., NEW YORK, NY, US; SWIERSTRA D ET AL: "Grooved floor system for cattle housing: Ammonia emission reduction and good slip resistance" Database accession no. E2001296578797 XP002216684 & APPL ENG AGRIC;APPLIED ENGINEERING IN AGRICULTURE JANUARY 2001, Bd. 17, Nr. 1, Januar 2001 (2001-01), Seiten 85-90,

## Beschreibung

Die Erfindung betrifft ein Ausmistsystem mit einem Flur, beispielsweise in einem Laufstall, und einem Ausmistschieber, der aufweist ein Zentralelement, an dem Antriebskräfte zum Hin- und Herbewegen angreifen, und wenigstens einen zwischen einer angeklappten und einer aufgeklappten Stellung zum einseitigen Abfördern von auf dem Flur aufliegendem Mist, Gülle etc. frei schwenkbar am Zentralelement angelenkten Schieberarm, der sich selbsttätig bei der Förderbewegung aufklappt und bei der nicht fördernden Rückbewegung selbsttätig anklappt.

Ein derartiges Ausmistsystem ist von der Firma Langhout machinebouw b.v., 8801 JB Franeker, NL, entsprechend dem Prospekt "Uitmest Systemen" zweite Seite unten rechts bekannt. Bei dem System wird der auf dem Flurboden aufliegende Ausmistschieber von einer mittig auf dem Flur in Längsrichtung angeordneten Schubstange angetrieben. Dabei bewegt sich die Schubstange über einen elektrohydraulischen Antrieb mit einem Hub von 1,8 m hin- und her. Auf der Schubstange angeordnete Mitnehmervorsprünge sorgen dabei für eine schubweise Bewegung des Schiebers in einer Richtung über die gesamte Flurlänge von einigen 10 m. Am Ende des Flurs wird dann selbsttätig der Mitnehmermechanismus in dem Zentralelement des Ausmistschiebers umgesteuert, so daß der Schieber wieder schubweise in der entgegengesetzten Richtung über den gesamten Flur bis zum entgegengesetzten Umsteuerungspunkt von der Schubstange transportiert wird.

An dem auf der Schubstange aufreitendem Zentralelement sind an jeder Seite zwei schwenkbare Schieberarme frei beweglich angelenkt. Bei der Schieberbewegung in Förderrichtung klappen die auf dem Flurboden auflastenden Schieberarme selbsttätig bis zum maximalen Anschlag auf. Dabei bilden die beiden Schieberarme ein weit aufgestelltes "V", mit dem der Flurboden vom Mist gereinigt wird und dieser in der einen Förderrichtung transportiert wird. Am Förderende des Flures ist eine geeignete Vorrichtung zum weiteren Abtransport des dort zusammengeschobenen Mistes vorgesehen.

Nach Umsteuerung der Bewegungsrichtung des Schiebers klappen die frei beweglich angelenkten Schieberarme bei der Rückbewegung durch deren nachschleppende Auflast auf dem Flurboden zusammen, so daß der Mistschieber bei seiner Rückbewegung das im Flurbereich stehende Vieh nicht unnötig belästigt. Somit ist bei derartigen Anlagen ein etwa halbierter Streßfaktor gegenüber Anlagen mit feststehenden Ausmistschiebern festzustellen.

Ferner ist aus einem niederländischen Zeitschriftentitel "Veeteelt" vom März 2001, Seite 16 und 17 ein Boxenlaufstall mit Rillenflur bekannt, bei dem entlang des Rillenflurs bewegbare, starre Reinigungsschieber dargestellt sind. Da zur Reinhaltung des Laufflurs 8 bis 10 x pro Tag ein vollständiger Bewegungszyklus erfolgen muß, ist hier eine entsprechend höhere Belästigung des auf dem Flur stehenden Viehs zu verzeichnen. Ferner ist nachteiligt, daß derartige Anlagen nicht für das Aufstreuen von Stroh und die daraus resultierenden größeren Mistmengen ausgelegt ist. Vielmehr soll der starre Schieber die Fluroberfläche von den Fäkalien reinigen, wobei sich die in den Rillen ansammelnde Flüssigkeit über Durchlässe in die darunter befindliche Güllegrube hindurchtreten kann. Insbesondere wird durch die Hin- und Herbewegung des starren Schiebers die Durchmischung von Urin und Fäkalien zu Gülle verstärkt.

Andererseits haben Rillenflure den Vorteil, daß die flüssigen Bestandteile der Fäkalien und insbesondere der Urin der Tiere von den Rillen aufgenommen und schneller abgeführt wird. Die Tiere stehen somit auf Rillenfluren trockener als auf ebenen, durchgehenden Flurböden.

Aufgabe der Erfindung ist es daher, das eingangs beschriebene Ausmistsystem für die Verwendung auf Rillenflure anzupassen, wobei insbesondere auch die Verwendung von Einstreu, beispielsweise Stroh auf den Flurböden ermöglicht werden soll. Dazu ist es insbesondere erforderlich, daß die Rillen regelmäßig freigekratzt werden.

Gelöst wird diese Aufgabe mit einem Ausmistsystem gemäß Anspruch 1 bzw. mit einem Arbeitsverfahren für das Ausmistsystem gemäß Anspruch 14.

Durch die in die Rillen eintauchenden Zinken des am Schieberarm beweglich angeordneten harkenartigen Elementes wird ein Auskratzen der Rillen bei in Bewegungsrichtung des Ausmistschiebers angeordneten Rillen ermöglicht. Durch die Mittel zum Verstellen des harkenartigen Elementes zwischen einer ersten Stellung, bei der die Zinken des harkenartigen Elementes in die Rillen eintauchen, und einer zweiten Stellung, bei der die Zinken nicht in die Rillen eintauchen, wird weiterhin das zur streßfreieren Tierhaltung vorteilhafte Zusammenklappen des Ausmistschiebers bei der Rückbewegung ermöglicht. Vorteilhaft wird damit auch bei Verwendung eines Rillenflures eine einseitige Abförderung des auf dem Flur aufliegenden Mistes erreicht. Vom Arbeitsablauf her ist somit eine an einer Seite des Stalls angeordnete Mistentsorgung ausreichend.

Dadurch, daß die Mittel zum Verstellen des harkenartigen Elementes Mittel zum Verschwenken des Elementes um eine in Längsrichtung des Schieberarms im wesentlichen horizontal angeordnete Schwenkachse aufweisen, wird eine einfache Möglichkeit zum Verstellen des harkenartigen Elementes von der ersten Stellung in die zweite Stellung und umgekehrt angegeben.

Wenn die Mittel zum Verstellen des harkenartigen Elementes Mittel zum im wesentlichen vertikalen Verschieben des Elementes am Schieber aufweisen, wird eine alternative Verstellung des harkenartigen Elements bereitgestellt. Beim vertikalen Verschieben des harkenartigen Elementes wird die Gefahr eines Verkantens der Zinken an den Rillenrändern weitestgehend vermieden.

Bevorzugt sind die Mittel zum im wesentlichen vertikalen Verschieben ineinandergreifende Führungselemente am harkenartigen Element und Schieberarm.

In weiterer Ausgestaltung bestehen die Führungselemente aus im harkenartigen Element vorgesehenen Langlöchern und am Schieberarm angeordneten Führungsstiften. Alternativ kann dies selbstverständlich auch umgekehrt angeordnet sein.

Dadurch, daß unmittelbar vor dem Anklappen des Schieberarms ein Auslösemechanismus zum Verstellen des harkenartigen Elementes von der ersten in die zweite Stellung vorgesehen ist, wird das Verstellen des harkenartigen Elementes in die zweite, angehobene Stellung automatisiert, so daß beim anschließenden Zusammenklappen des Schiebers ein Verhaken der Zinken des harkenartigen Elementes in den Rillen sicher vermieden wird.

Bevorzugt weist der Auslösemechanismus Auflaufschrägen in den Rillen im Bereich kurz vor der Bewegungsrichtungsänderung von der fördernden Vorwärtsbewegung des Schiebers in die Rückbewegung auf, mit denen die Zinken und damit das harkenartige Element in die zweite Stellung angehoben werden. Die Auflaufschrägen können an geeigneter Stelle in den Rillen auch nachträglich einsetzbar ausgebildet werden. Nach den Auflaufschrägen muß ein ausreichender Bereich der Rille bis zur Oberkante des Rillenflurs aufgefüllt sein, um in diesem Bereich ein Zusammenklappen des Schiebers zu ermöglichen.

Wenn Mittel zum Arretieren des harkenartigen Elementes in der zweiten Stellung vorgesehen sind, werden die Zinken des harkenartigen Elementes an einem unbeabsichtigen Eintauchen in die Rillen gehindert. Wenn die Mittel zum Arretieren einen Vorsprung am harkenartigen Element aufweisen, der in angehobener zweiter Stellung in bereits geringfügig angeklappter Stellung des Schieberarms ein festes Widerlager am Zentralelement übergreift, wird eine mechanisch einfache und beim Zusammenklappen des Schiebers schnell wirkende Arretierung bereitgestellt.

Der Arretierungsvorgang wird weiter dadurch verbessert, daß die Langlöcher für den letzten Bewegungsabschnitt unmittelbar vor Erreichen der zweiten Stellung schräg zur Schwenkachse des Schieberarms ausgerichtet sind, um eine Lateralbewegungskomponente des harkenartigen Elements gerichtet auf das Zentralelement zu erzeugen.

Um an der anderen Seite des Flures ein Eintauchen der Zinken zu ermöglichen, ist beim selbsttätigen Aufklappen des Schieberarms ein Lösen der Mittel zum Arretieren des harkenartigen Elements in der zweiten Stellung vorgesehen.

Bevorzugt weist der Ausmistschieber zwei Schieberarme auf, die beiderseits des Zentralelements angelenkt sind. Damit ist ein im wesentlichen symmetischer Aufbau des Schiebers mit entsprechend im wesentlichen ausgeglichener Belastung erreicht. Zudem eignet sich inbesondere eine weit geöffnete V-Form der Schieberarme für eine effektive Aufnahme/Förderung des abzuführenden Mistes.

Um einen übermäßigen Verschleiß an den Rillenflanken des Rillenflures zu vermeiden, sind die Rillen des Rillenflurs durch U-Profile, bevorzugt aus Stahl, verstärkt. Gleichzeitig wird damit die Verletzungsgefahr an den Klauen der Tiere aufgrund von ausgetretenen Rillen vermieden.

Neben dem eingangs genannten elektrohydraulischen Antrieb des Schiebers über eine sich hin- und herbewegende Schubstange kann der Schieber auch über einen im Flurboden verlegten Seil- oder Kettenantrieb bewegt werden. Dabei wird das Seil bzw. die Kette bevorzugt als Endlosschlaufe über Umlenkungen an den beiden gegenüberliegenden Rillenflurenden geführt. Vorteilhaft kann dabei der Schieber kontinuierlich sowohl in der Förderbewegung wie auch in der Rückbewegung geführt werden. Am Flurende wird jeweils die Antriebsrichtung umgekehrt. Durch die kontinuierliche Förderbewegung wird die Streßbelastung für das Vieh durch den Schieber noch weiter reduziert.

Bevorzugt ist ein automatisiertes Arbeitsverfahren mit dem vorgenannten Ausmistsystem mit folgenden Schritten: Fördern von Mist mit dem aufgeklappten Ausmistschieber in Förderrichtung, wobei die Rillen des Rillenflurs mit darin eingetauchten Zinken (erste Stellung) ausgekratzt/gereinigt werden; Anheben der in den Rillen eintauchenden Zinken in eine zweite Stellung vor Bewegungsrichtungsumkehr des Schiebers; Umsteuerung der Bewegungsrichtung des Schiebers, wobei der/die Schieberarme aufgrund der Auflast auf dem Flurboden beginnen sich einzuklappen; Arretieren der Zinken in der zweiten Stellung und vollständiges Anklappen des/der Schieberarme; Rückbewegen des zusammengeklappten Schiebers bis zur anderen Flurseite; Umsteuerung der Bewegungsrichtung des Schiebers von Rückbewegung in Förderbewegung, wobei der/die Schieberarme aufgrund der Auflast auf dem Flurboden in Förderstellung aufklappen; Lösen der Arretierung der angehobenen (zweite Stellung) Zinken, wobei die Zinken schwerkraftbedingt bei vollständiger Entfaltung des/der Schieberarme in die Rillen eintauchen, und erneutes Fördern von Mist gemäß erstem Schritt.

Nachfolgend wird das erfindungsgemäße Ausmistsystem, der Ausmistschieber sowie das dazugehörige Arbeitsverfahren anhand eines Ausführungsbeispiels unter Bezugnahme auf die beiliegenden Zeichnungen detailliert beschrieben.

Darin zeigt:
- Fig. 1: ein Ausmistsystem in räumlicher Ansicht mit einem Ausmistschieber und einem im Ausschnitt dargestellten Rillenflur mit dazugehöriger ausgeschnittener Detailansicht des Ausmistschieber in einer ersten Förderstellung zum Ausmisten des Rillenflures,
- Fig. 2: das in Fig. 1 dargestellte Ausmistsystem in einer zweiten Bewegungsdarstellung mit zugehöriger Detailansicht,
- Fig. 3: das in Fig. 1 dargestellte Ausmistsystem in einer dritten Bewegungsdarstellung mit zugehöriger Detailansicht,
- Fig. 4: das in Fig. 1 dargestellte Ausmistsystem in einer vierten Bewegungsdarstellung mit zugehöriger Detailansicht,
- Fig. 5: das in Fig. 1 dargestellte Ausmistsystem in einer fünften Bewegungsdarstellung mit zugehöriger Detailansicht,
- Fig. 6: das in Fig. 1 dargestellte Ausmistsystem in einer sechsten Bewegungsdarstellung mit zugehöriger Detailansicht und
- Fig. 7a,b,c: drei Ansichten eines Schieberarms mit harkenartigem Element.

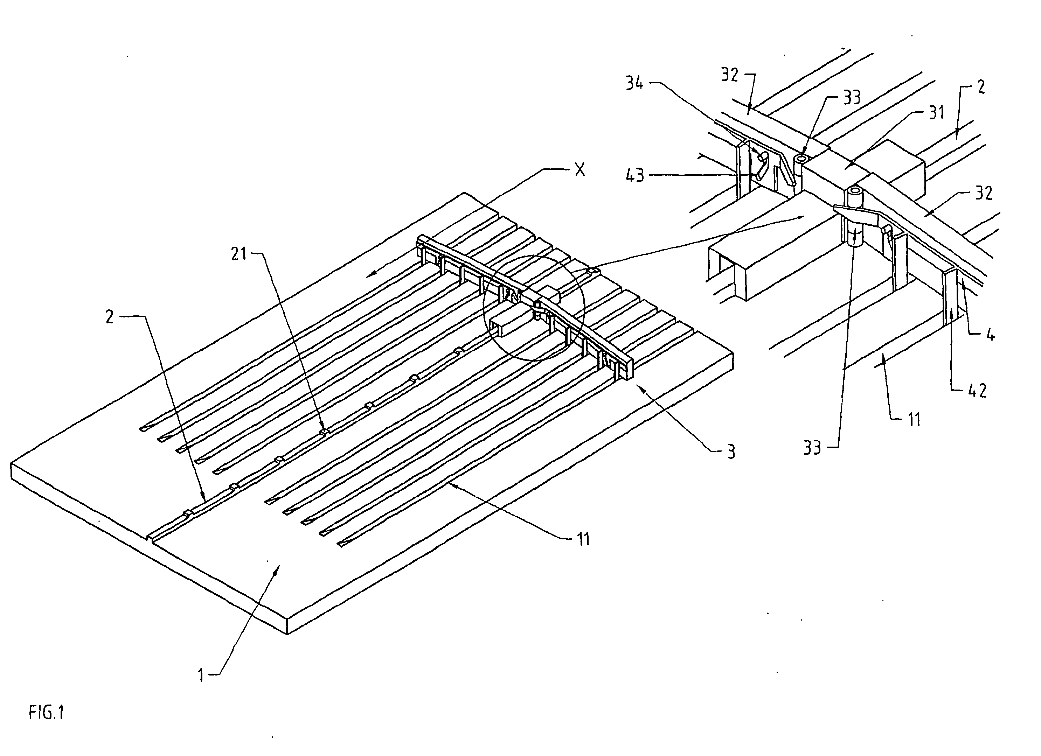

In Fig. 1 ist ein Rillenflur 1 mit einer Vielzahl von parallel angeordneten Rillen 11 in räumlicher Ansicht dargestellt. In Längsrichtung des Flurs 1 bzw. der Rillen 11 ist der Flur stark verkürzt wiedergegeben. In der Mitte des Flures 1 ist eine über eine nicht dargestellte Betätigungseinrichtung hin- und herbewegbare Schubstange 2 dargestellt. Die Schubstange 2 wird von der - Betätigungseinrichtung, beispielsweise einer elektrohydraulischen Kolbenhubeinrichtung, mit einem Hub von 1,8 m in Längsrichtung hin- und herbewegt werden. Die Schubstange 2 weist auf ihrer Oberseite Mitnehmervorsprünge 21 auf.

Ferner ist in Fig. 1 ein Ausmistschieber 3 dargestellt, der ein Zentralelement 31 und zwei Schieberarme 32 aufweist. Das Zentralelement 31 reitet auf der Schubstange 2 und wird bei jedem Hub der Schubstange 2 über die Mitnehmervorsprünge 21 etappenweise in einer Richtung bewegt. Im in Fig. 1 dargestellten Bewegungszustand wird der Ausmistschieber 3 über Schubstange 2 in Pfeilrichtung X bewegt.

Alternativ kann der Antrieb des Ausmistschiebers 3 auch über ein im Rillenflur endlos geführtes Stahlseil oder Kette erfolgen, wobei dann die Bewegung vom einen Ende zum anderen Ende des Rillenflures kontinuierlich erfolgen kann. Am Ende des Rillenflurs wird dann jeweils lediglich die Drehrichtung der Antriebseinheit, beispielsweise ein Elektromotor, umgesteuert.

Wie insbesondere aus der in Fig. 1 dargestellten Detailansicht erkennbar ist, sind die beiden Schieberarme 32 jeweils über ein Scharnier 33 an dem Zentralelement 31 um die durch Scharnier 33 definierte Schwenkachse frei beweglich angelenkt.

Im in Fig. 1 dargestellten Bewegungszustand sind die Schieberarme 32 vollständig zu einer weit geöffneten V-Form aufgestellt.

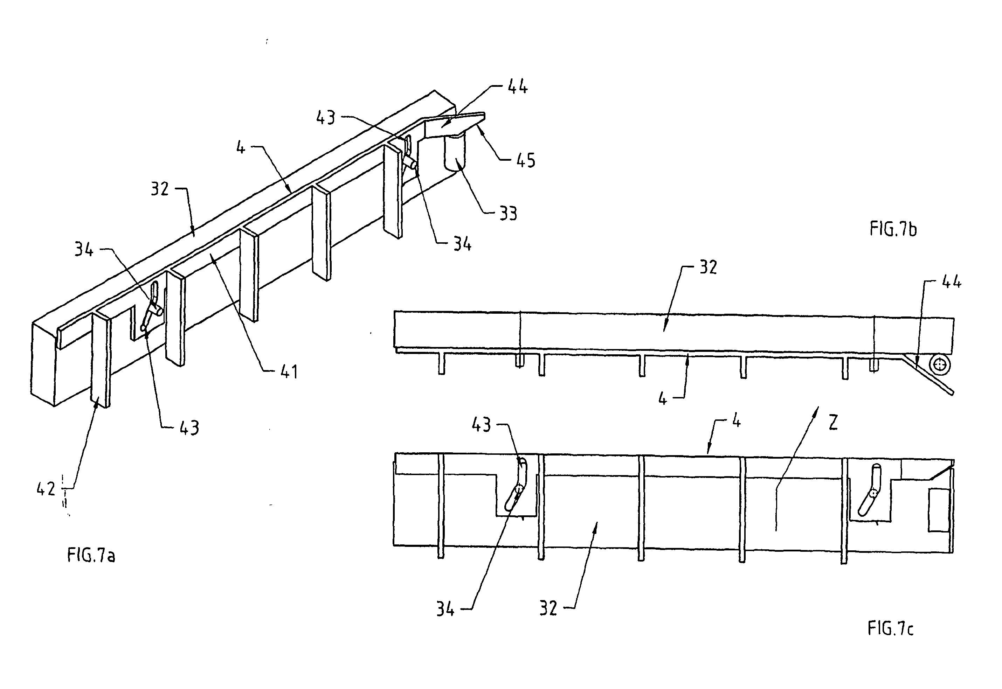

Bezugnehmend auf Fig. 7a ist an jedem Schieberarm 32 ein harkenartiges Element 4 verschiebbar befestigt. Das harkenartige Element weist einen Träger 41 auf, an dem entsprechend der jeweilig zugeordneten Rillenzahl und dem Rillenabstand Zinken 42 angeordnet sind. In dem Trägerelement 41 sind zudem wenigstens zwei Langlochführungen 43 eingebracht. Die Langlochführungen 43 korrespondieren mit am Schieberarm 32 befestigten Führungsstiften 34. Am zum Scharnier 33 zur schwenkbaren Anlenkung des Schieberarms 32 am Zentralelement 31 gerichteten Ende des Trägerelements 41 des harkenartigen Elementes 4 ist ein Arretierungsvorsprung 44 leicht abgewinkelt angeordnet (s. Fig. 7b).

Wie aus der Seitenansicht der Fig. 7c erkennbar, weisen die Führungslanglöcher 43 im wesentlichen vertikale Erstreckung mit einem unteren leicht abgewinkelten Abschnitt auf. Damit wird erreicht, daß beim Anheben des harkenartigen Elementes 4 zunächst ca. über die Hälfte des Hubweges das Element und somit die in die Rillen 11 eintauchenden Zinken 42 im wesentlichen senkrecht nach oben geführt werden, im oberen zweiten Hubabschnitt wird dann das harkenförmige Element 4 aufgrund des leicht abgewinkelten Abschnittes des Langlochs 43 beim weiteren Anheben gleichzeitig eine seitliche oder Lateralbewegung erfahren, wie dies Pfeil Z darstellt.

In einer weiter bevorzugten Ausführungsform ist das harkenartige Element in dem Schieberarm, beispielsweise innerhalb eines U-förmigen Schieberarms aufgenommen, um eine übermäßige Verschmutzung der beweglichen Teile zu vermeiden und die Verletzungsgefahr für das Vieh zu minimieren. Zur Erhöhung der Reinigungswirkung auf dem Rillenflur kann auf der auf dem Rillenflur aufliegenden Unterseite des Schieberarms eine Gummiauflage vorgesehen werden. Zur weiteren Erhöhung der Reinigungswirkung kann diese Gummiauflage profiliert ausgebildet sein.

Im dargestellten Ausführungsbeispiel ist in Fig. 1 in der Detailansicht zu erkennen, daß das harkenförmige Element 4 mit seinen Zinken 42 vollständig in den Rillen 11 eingetaucht ist. Der am Schieberarm 32 befestigte Führungsstift 34 befindet sich entsprechend am oberen Ende des Führungslanglochs 43.

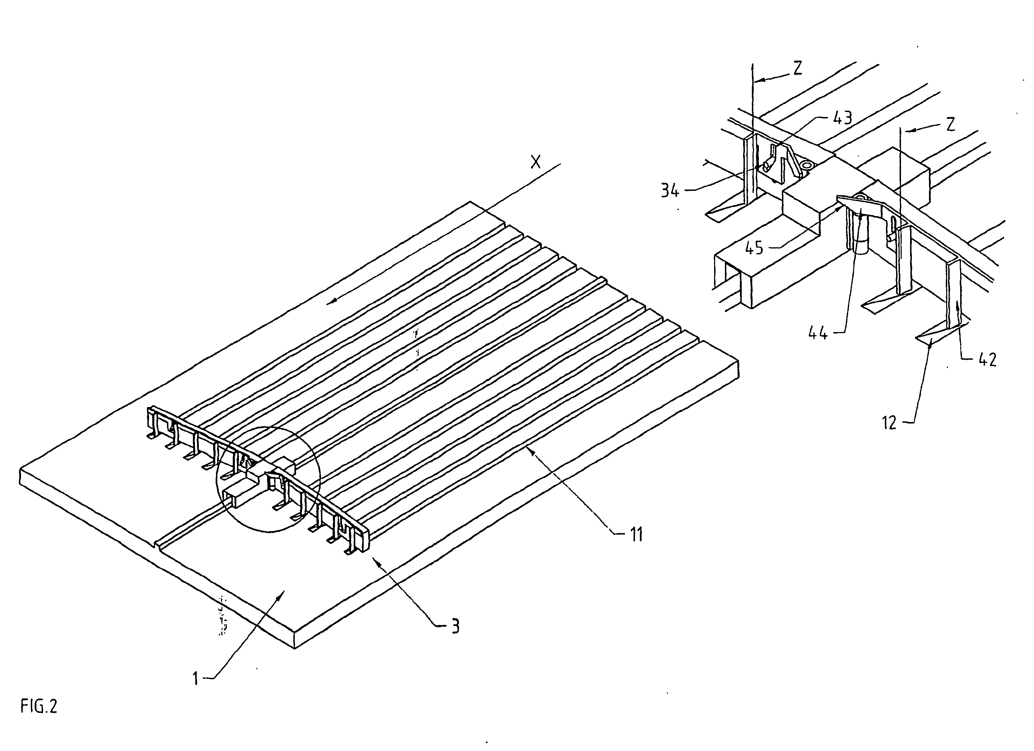

Bei der weiteren Bewegung des Ausmistschiebers 3 in Förderrichtung X erreicht der Schieber 3 die in Fig. 2 dargestellte Bewegungsposition. Der Schieber 3 läuft dabei mit seinen in den Rillen 11 eintauchenden Zinken 42 des harkenförmigen Elementes 4 auf am Ende der Rillen 11 angeordnete Auflaufschrägen 12 auf. Bei weiterer Bewegung des Ausmistschiebers 3 in Pfeilrichtung X werden die beiden harkenförmigen Elemente 4 geführt über die in den Führungslanglöchern 43 gleitenden Führungsstifte 34 entsprechend Pfeilrichtung Z angehoben. Dieser Zustand ist in Detailansicht in Fig. 2 entsprechend erkennbar. Dabei befinden sich die beiden harkenförmigen Elemente in etwa in halber Eintauchtiefe der Zinken ähnlich der in Fig. 7 dargestellten Stellung. Dabei haben die harkenförmigen Elemente bisher im wesentlichen nur eine Vertikalbewegung vollzogen.

Bei weiterer Bewegung in der Laufrichtung X werden die beiden harkenförmigen Elemente 4 durch das Aufgleiten über die in den Rillen 11 angeordneten Auflaufschrägen 12 vollständig angehoben, um sich dabei gleichzeitig lateral nach innen zu verschieben. Dabei übergreifen die Vorsprünge 44 das Gehäuse des Zentralelementes 31.

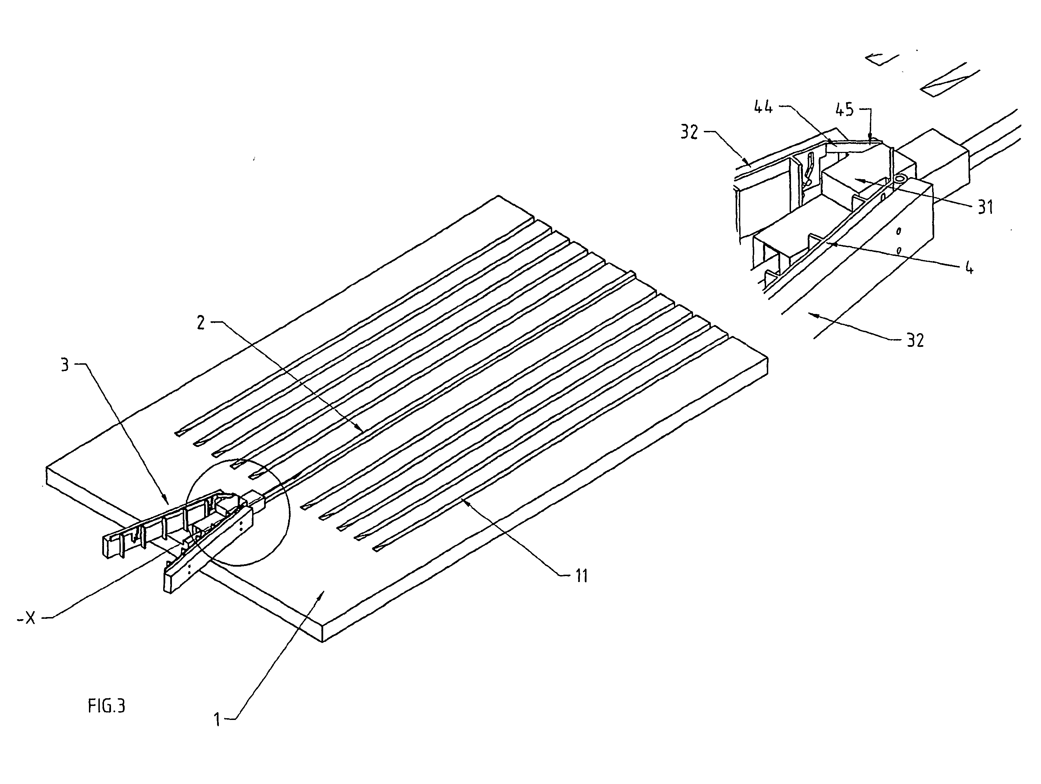

Nun erfolgt die Umsteuerung der Antriebsrichtung des Ausmistschiebers 3, wobei nun das Zentralelement 31 von den Mitnehmervorsprüngen 21 der Schubstange 2 lediglich hubweise in Rückwärtsrichtung gemäß Pfeil -X bewegt wird. Dabei klappen die frei auf dem Flur aufliegenden Schieberarme 32 automatisch zusammen. Dieser Zustand ist in Fig. 3 dargestellt. Sobald bei der Rückwärtsbewegung in Pfeilrichtung -X der Einklappvorgang der Schieberarme 32 beginnt, übergreifen die Vorsprünge 44 das Zentralelement 31 deutlich, wobei mittels der vorgesehenen Auflaufschräge 45 an dem Vorsprung 44 ein zusätzliches geringfügiges weiteres Anheben des harkenförmigen Elementes erreicht wird, um die Zinken 42 vom Flur 1 abzuheben und ein Verhaken der Zinken an Unebenheiten oder den Rillenrändern sicher zu vermeiden. Im zusammengeklappten Zustand liegen somit die Vorsprünge 44 auf dem Gehäuse des Zentralelementes 31 auf.

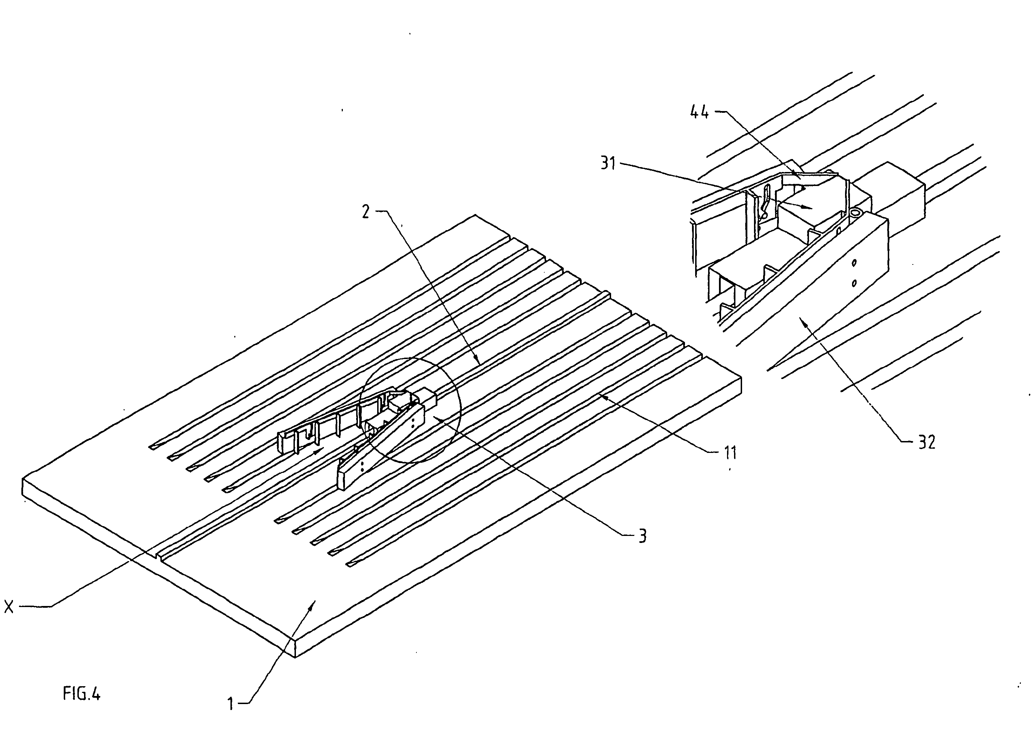

Nun bewegt sich der zusammengeklappte Ausmistschieber 3 in Rückbewegung in Pfeilrichtung -X zu seiner Ausgangslage zurück. Das Vieh kann sich dabei rechts und links des zusammengeklappten Ausmistschiebers 3 unbehelligt von dieser Bewegung frei bewegen (siehe Fig. 4).

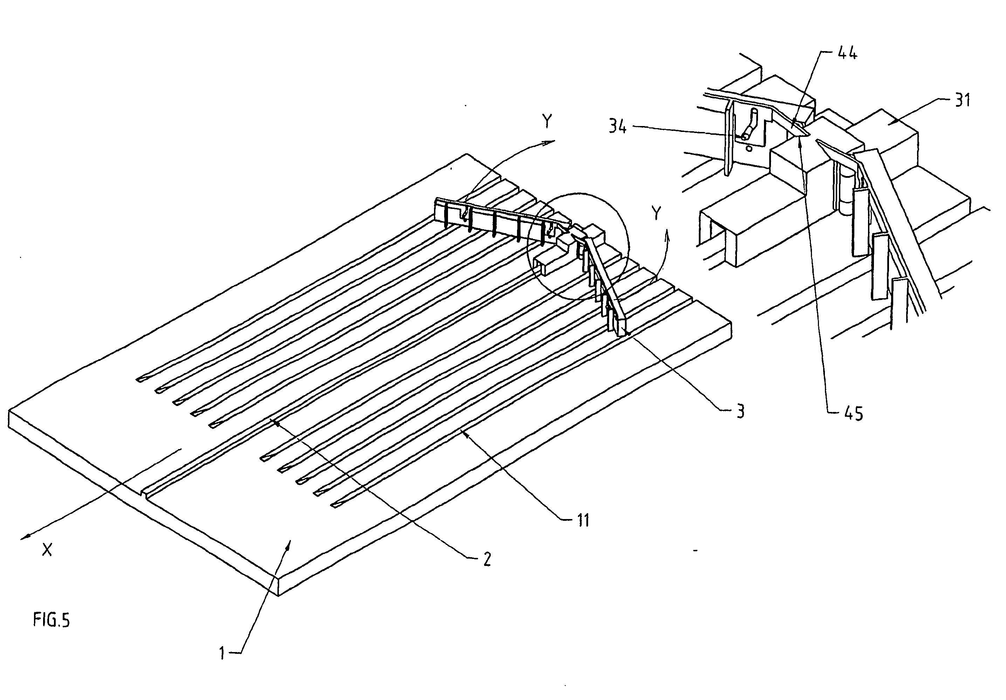

In Fig. 5 ist der Bewegungszustand des Ausmistschiebers 3 kurz nach Umsteuerung der Bewegungsrichtung von der in Fig. 4 dargestellten Rückbewegung in die erneute Förderbewegung in Pfeilrichtung X wiedergegeben.

Durch die Vorwärtsbewegung in Pfeilrichtung X des auf der Schubstange 2 aufreitenden Zentralelementes 31 öffnen sich die auf dem Flurboden auflastenden Schieberarme 32 in einem sich weiter öffnenden "V" gemäß Pfeilrichtung Y. In der Detaildarstellung ist zu erkennen, daß die noch vollständig angehobenen harkenartigen Elemente 4 mit ihren Arretierungsvorsprüngen 44 noch auf dem Gehäuse des Zentralelementes 31 aufliegen. Dabei erreichen jedoch gerade die Übergänge zur Auflaufschräge 45 die unterliegende Gehäusekante des Zentralelementes 31.

Bei nun fortscheitender Bewegung des Zentralelementes 31 in Bewegungsrichtung X werden die Schieberarme 32 in Pfeilrichtung Y weiter aufklappen und die harkenartigen Elemente 4 werden sich entsprechend der Auflaufschräge 45 am Arretierungsvorsprung 44 absenken. Beim restlichen Öffnungsweg der Schieberarme 32 werden nun die Zinken 42 solange über die Fluroberfläche rutschen, bis die Schieberarme vollständig geöffnet sind und die Zinken 42 mit den zugeordneten Rillen 11 ausgerichtet sind, so daß die Zinken 42 in die Rillen 11 eintauchen können.

Die Geometrie des Arretierungsvorsprunges 44 mit Auflaufschräge 45 ist in Verbindung mit dem Gehäuse des Zentralelements 31 so ausgebildet, daß das Absenken des harkenartigen Elements 4 und somit das Absenken der Zinken 42 erst erfolgt, wenn auch die äußeren Zinken des Schieberarms 32 die jeweils benachbart zur eigentlich zugeordneten Rille angeordnete Rille überstrichen haben. Somit wird ab Absenken der Zinken 42 und der rutschenden Bewegung der Zinken auf der Fluroberfläche vermieden, daß diese unerwünscht mit der nicht zugeordneten Rille verhaken können.

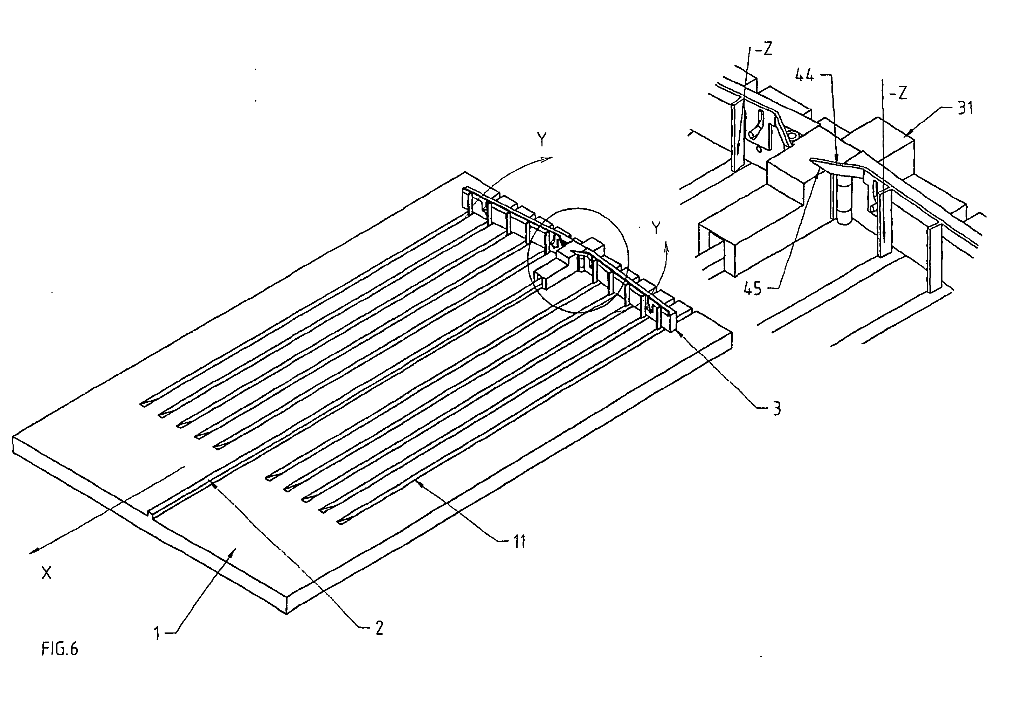

In Fig. 6 ist der Bewegungszustand des Ausmistschiebers 3 im letzten Moment der Entfaltung der Schieberarme 32 dargestellt. Dabei bewegt sich das Zentralelement 31 des Schiebers 3 in Laufrichtung X wobei die Schieberarme 32 aufgrund ihrer Auflast auf dem Flurboden 1 sich in Preilrichtung Y öffnen. Kurz vor dem Erreichen der vollständigen Entfaltung der Schieberarme 32 befinden sich die Zinken 42 des harkenartigen Elementes 4 über die Fluroberfläche rutschend am Rand der zugeordneten Rillen 11, wie dies in der Detailansicht der Fig. 6 erkennbar ist. Die Vorsprünge 44 liegen dabei mit ihrem Auflaufschrägen 45 bereits mit einem Freiraum oberhalb des Gehäuses des Zentralelementes 31, wobei bei dem in Fig. 6 dargestellten Bewegungszustand die Vorspünge 44 bereits an dem Gehäuse des Zentralelementes 31 vorbeigleiten können. Sobald die Zinken 42 frei in die ihnen zugeordneten Rillen 11 gleiten könnten, senken sich die harkenartigen Elemente 4, geführt über die am Schieberarm 32 befestigten Führungsstiften 34 entlang der Führungslanglöcher 43 in die Rillen 11 ab (Pfeilrichtung -Z).

Somit ist der Bewegungszustand von Fig. 1 wieder erreicht, womit sich der Bewegungszyklus schließt. Durch diese Hin- und Herbewegung des Ausmistschiebers 3 und das davon ausgelöste Auf- und Zusammenklappen der Schieberarme 32 wird die erwünschte einseitige Abförderung von auf dem Flurboden aufliegendem Mist erreicht. Die anheb- und absenkbaren harkenartigen Elemente 4 erlauben mit ihren Zinken 42 dabei das automatische Auskratzen der im Flurboden 1 angeordneten Rillen 11.

Somit werden auch die Rillen weitestgehend frei von Mistbestandteilen gehalten, so daß der erwünschte Ablauf von flüssigen Bestandteilen (Jauche) über die Rillen 11 gewährleistet wird.

Mit dem Ausmistsystem kann somit eine effektive automatische Ausmistung in Boxenlaufställen verwirklicht werden, bei denen die vorteilhafte Fäkalienbindung über Einstreu von Stroh, Holzspänen und/oder Sand erreicht wird. Der Mist wird einseitig abgefördert, so daß lediglich an einer Seite des Stalls eine entsprechende Anordnung zum Weitertransport und Sammeln (Misthaufen) vorgesehen werden muß.

Die sich in den Rillen sammelnde Flüssigkeit (Jauche) wird über die Rillen in eine geeignete Auffangvorrichtung geleitet, beispielsweise eine zum Laufgang quer angeordnete Jauchegrube, die bevorzugt am abförderseitigen Ende des Flures vor dem Umsteuerungspunkt des Ausmistschiebers angeordnet ist. Die in die Rillen eintauchenden Zinken sorgen dabei für ein stetes Freikratzen der Rillen, so daß der Flüssigkeitsablauf gewährleistet ist. Damit steht das Vieh auf dem Rillenflur sehr trocken, womit die Gefahr von Klauenkrankheiten erheblich vermindert wird. Darüber hinaus wird eine wirksame Trennung von Mist und Jauche unterstützt, womit mit dem Strohmist ein idealer Bodendünger für landwirtschaftlich bewirtschaftete Flächen zur Verfügung steht.

### Bezugszeichenliste

- 1: Rillenflur
- 11: Rille
- 12: Auflaufschräge

- 2: Schubstange
- 21: Mitnehmervorsprung

- 3: Ausmistschieber
- 31: Zentralelement
- 32: Schieberarm
- 33: Scharnier
- 34: Führungsstift

- 4: harkenartiges Element
- 41: Träger
- 42: Zinke
- 43: Langtochführung
- 44: Arretierungsvorsprung
- 45: Auflaufschräge

## Patentansprüche

1. Ausmistsystem mit einem Flur (1), beispielsweise in einem Laufstall, und einem Ausmistschieber (3), der aufweist ein Zentralelement (31), an dem Antriebskräfte zum Hin- und Herbewegen angreifen, und wenigstens einen zwischen einer angeklappten und einer aufgeklappten Stellung zum einseitigen Abfördern von auf dem Flur (1) aufliegendem Mist, Gülle etc. frei schwenkbar am Zentralelement (31) angelenkten Schieberarm (32), der sich selbsttätig bei der Förderbewegung aufklappt und bei der nicht fördernden Rückbewegung selbsttätig anklappt, **dadurch gekennzeichnet, daß** der Flur (1) Rillen (11) aufweist, wobei die Bewegungsrichtung (X, -X) des Ausmistschiebers (3) parallel zu den Rillen (11) des Rillenflures (1) ausgerichtet ist, und daß ein sich über die Längsrichtung des Schiebers erstreckendes, harkenartiges Element (4) am Schieberarm (32) beweglich angeordnet ist, wobei Mittel zum Verstellen des harkenartigen Elementes (4) vorgesehen sind zwischen einer ersten Stellung, bei der Zinken (42) des harkenartigen Elementes (4) in die Rillen (11) eintauchen, und einer zweiten Stellung, bei der die Zinken (42) nicht in die Rillen (11) eintauchen.

2. Ausmistsystem nach Anspruch 1, **dadurch gekennzeichnet, daß** die Mittel zum Verstellen des harkenartigen Elementes Mittel zum Verschwenken des Elementes um eine in Längsrichtung des Schieberarms (32) im wesentlichen horizontal angeordnete Schwenkachse aufweisen.

3. Ausmistsystem nach Anspruch 1, **dadurch gekennzeichnet, daß** die Mittel zum Verstellen des harkenartigen Elementes Mittel zum im wesentlichen vertikalen Verschieben des Elementes (4) am Schieberarm (32) aufweisen.

4. Ausmistsystem nach Anspruch 3, **dadurch gekennzeichnet, daß** die Mittel zum im wesentlichen vertikalen Verschieben ineinandergreifende Führungselemente (34, 43) am hakenartigen Element (4) und Schieberarm (32) sind.

5. Ausmistsystem nach Anspruch 4, **dadurch gekennzeichnet, daß** die Führungselemente aus Langlöchern (43) am harkenartigen Element (4) bzw. am Schieberarm (32) und Führungsstiften (34) am Schieberarm (32) bzw. am harkenartigen Element (4) bestehen.

6. Ausmistsystem nach einem der vorangehenden Ansprüche, **dadurch gekennzeichnet, daß** unmittelbar vor dem Anklappen des Schieberarms (32) ein Auslösemechanismus zum Verstellen des harkenartigen Elementes (4) von der ersten in die zweite Stellung vorgesehen ist.

7. Ausmistsystem nach Anspruch 6, **dadurch gekennzeichnet, daß** der Auslösemechanismus Auflaufschrägen (12) in den Rillen (11) im Bereich kurz vor der Bewegungsrichtungsänderung von der fördernden Vorwärtsbewegung des Schiebers (3) in die Rückbewegung aufweist, mit denen die Zinken (42) und damit das harkenartige Element (4) in die zweite Stellung angehoben werden.

8. Ausmistsystem nach Anspruch 6 oder 7, **dadurch gekennzeichnet, daß** Mittel zum Arretieren (44, 45) des harkenartigen Elementes (4) in der zweiten Stellung vorgesehen sind.

9. Ausmistsystem nach Anspruch 8, **dadurch gekennzeichnet, daß** die Mittel zum Arretieren einen Vorsprung (44) am harkenartigen Element (4) aufweisen, der in angehobener zweiter Stellung in bereits geringfügig angeklappter Stellung des Schieberarms ein festes Widerlager am Zentralelement (31) übergreift.

10. Ausmistsystem nach Anspruch 5 und 9, **dadurch gekennzeichnet, daß** die Langlöcher (43) für den letzten Bewegungsabschnitt unmittelbar vor Erreichen der zweiten Stellung schräg zur Schwenkachse des Schieberarms (32) ausgerichtet sind, um eine Lateralbewegungskomponente des harkenartigen Elements (4) gerichtet auf das Zentralelement (31) zu erzeugen.

11. Ausmistsystem nach Anspruch 8, 9 oder 10, **dadurch gekennzeichnet, daß** beim selbsttätigen Aufklappen des Schieberarms (32) ein Lösen der Mittel zum Arretieren (44, 45) des harkenartigen Elements (4) in der zweiten Stellung vorgesehen ist.

12. Ausmistsystem nach einem der vorangehenden Ansprüche, **dadurch gekennzeichnet, daß** der Ausmistschieber (3) zwei Schieberarme (32) aufweist, die beiderseits des Zentralelements (31) angelenkt sind.

13. Ausmistsystem nach einem der vorangehenden Ansprüche, **dadurch gekennzeichnet, daß** die Rillen (11) des Rillenflurs (1) durch U-Profile, bevorzugt aus Stahl, verstärkt sind.

14. Arbeitsverfahren mit einem Ausmistsystem nach einem der Ansprüche 1 bis 13, **gekennzeichnet durch** die Schritte:
- Fördern von Mist mit dem aufgeklappten Ausmistschieber in Förderrichtung, wobei die Rillen des Rillenflurs mit darin eingetauchten Zinken (erste Stellung) ausgekratzt/gereinigt werden;
- Anheben der in den Rillen eintauchenden Zinken in eine zweite Stellung vor Bewegungsrichtungsumkehr des Schiebers;
- Umsteuerung der Bewegungsrichtung des Schiebers, wobei der/die Schieberarme aufgrund der Auflast auf dem Flurboden beginnen sich einzuklappen;
- Arretieren der Zinken in der zweiten Stellung und vollständiges Anklappen des/der Schieberarme;
- Rückbewegen des zusammengeklappten Schiebers bis zur anderen Flurseite;
- Umsteuerung der Bewegungsrichtung des Schiebers von Rückbewegung in Förderbewegung, wobei der/die Schieberarme aufgrund der Auflast auf dem Flurboden in Förderstellung aufklappen;
- Lösen der Arretierung der angehobenen (zweite Stellung) Zinken, wobei die Zinken schwerkraftbedingt bei vollständiger Entfaltung des/der Schieberarme in die Rillen eintauchen, und erneutes Fördern von Mist gemäß erstem Schritt.

## Claims

1. A mucking-out system comprising a floor (1), for example in a pen, and a mucking-out slider (3) having a central member (31) on which driving forces act for movement back and forth, and at least one slider arm (32) which is articulated on the central member (31) so as to be freely pivotable between an open and a closed position for the unilateral clearing of muck, liquid manure, etc. lying on the floor (1) and which automatically opens during the clearing movement and automatically closes during the non-clearing return movement, **characterised in that** the floor (1) has grooves (11), wherein the direction of movement (X, -X) of the mucking-out slider (3) runs parallel to the grooves (11) of the grooved floor (1), and **in that** a rake-type member (4) extends over the longitudinal extent of the slider and is movably arranged on the slider arm (32), wherein means are provided for adjusting the rake-type member (4) between a first position in which prongs (42) of the rake-type member (4) extend into the grooves (11), and a second position in which the prongs (42) do not extend into the grooves (11).

2. A mucking-out system according to claim 1, **characterised in that** the means for adjusting the rake-type member have means for pivoting the member about a pivoting axis arranged substantially horizontally in the longitudinal direction of the slider arm (32).

3. A mucking-out system according to claim 1, **characterised in that** the means for adjusting the rake-type member have means for the substantially vertical displacement of the member (4) on the slider arm (32).

4. A mucking-out system according to claim 3, **characterised in that** the means for substantially vertical displacement are mutually engaging guide members (34, 43) on the rake-type member (4) and the slider arm (32).

5. A mucking-out system according to claim 4, **characterised in that** the guide members comprise slots (43) on the rake-type member (4) or the slider arm (32) and guide pins (34) on the slider arm (32) or the rake-type member (4).

6. A mucking-out system according to any one of the preceding claims, **characterised in that** a trigger mechanism is provided for displacing the rake-type member (4) from the first position into the second position immediately before the closure of the slider arm (32).

7. A mucking-out system according to claim 6, **characterised in that** the trigger mechanism has rising slopes (12) in the grooves (11) in the region shortly upstream of the change in the direction of movement from the clearing forwards movement of the slider (3) to the return movement, by means of which rising slopes (12) the prongs (42) and thus the rake-type member (4) are raised into the second position.

8. A mucking-out system according to claim 6 or 7, **characterised in that** means (44, 45) for locking the rake-type member (4) in the second position are provided.

9. A mucking-out system according to claim 8, **characterised in that** the locking means comprise a projection (44) on the rake-type member (4), which projection (44) engages over a fixed abutment on the central member (31) in the raised second position when the slider arm is already in a slightly closed position.

10. A mucking-out system according to claims 5 and 9, **characterised in that** the slots (43) for the last portion of movement immediately before the second position is reached are orientated at an angle to the pivoting axis of the slider arm (32) in order to generate a lateral movement component of the rake-type member (4) directed towards the central member (31).

11. A mucking-out system according to claim 8, 9 or 10, **characterised in that** the means (44, 45) for locking the rake-type member (4) in the second position are released during the automatic opening of the slider arm (32).

12. A mucking-out system according to any one of the preceding claims, **characterised in that** the mucking-out slider (3) has two slider arms (32) articulated on either side of the central member (31).

13. A mucking-out system according to any one of the preceding claims, **characterised in that** the grooves (11) of the grooved floor (1) are reinforced by U-sections, preferably of steel.

14. An operating method for a mucking-out system according to any one of claims 1 to 13, **characterised by** the following steps:
- clearing of muck by means of the open mucking-out slider in the clearing direction, wherein the grooves of the grooved floor are scratched out/cleaned by prongs extending into the grooves (first position);
- raising the prongs, extending into the grooves, into a second position before reversing the direction of movement of the slider;
- reversing the direction of movement of the slider, wherein the slider arm(s) begin to close owing to their weight on the floor;
- locking the prongs in the second position and completely closing the slider arm(s);
- moving the closed slider back to the other side of the floor;
- reversing the direction of movement of the slider from the return movement to the clearing movement, wherein the slider arm(s) open owing to their weight on the floor in the clearing position;
- releasing the locking means for the raised prongs (second position), wherein the prongs extend into the grooves under the force of gravity when the slider arm(s) are fully opened, and further clearing of muck in accordance with the first step.

## Revendications

1. Système d'enlèvement du fumier avec un couloir (1), par exemple dans une étable à stabulation libre, et un pousseur de fumier (3) muni d'un élément central (31) sur lequel s'engrainent des forces d'entraînement pour un mouvement de va-et-vient, et au moins un bras pousseur (32) articulé sur l'élément central (31) pour pouvoir librement pivoter entre une position rabattue et une position déployée pour le transport dans une direction de fumier ou de lisier se trouvant dans le couloir (1), lequel bras pousseur se déployant automatiquement lors du mouvement de transport et se rabattant automatiquement lors du mouvement de recul sans effet de transport, **caractérisé en ce que** le couloir (1) présente des rainures (11), la direction de déplacement (X, -X) du pousseur de fumier (3) étant orientée parallèlement aux rainures (11) du couloir à rainures (1), et **en ce qu'**un élément (4) en forme de râteau s'étendant dans le sens longitudinal du pousseur est disposé de façon mobile sur le bras pousseur (32), des moyens étant prévus pour ajuster l'élément en forme de râteau (4) entre une première position dans laquelle des dents (42) de l'élément en forme de râteau (4) pénètrent dans les rainures (11), et une deuxième position dans laquelle les dents (42) ne pénètrent pas dans les rainures (11).

2. Système d'enlèvement du fumier selon la revendication 1, **caractérisé en ce que** les moyens pour ajuster l'élément en forme de râteau sont munis de moyens pour faire pivoter l'élément autour d'un axe de pivotement disposé essentiellement horizontalement dans la direction longitudinal du bras pousseur (32).

3. Système d'enlèvement du fumier selon la revendication 1, **caractérisé en ce que** les moyens pour ajuster l'élément en forme de râteau sont munis de moyens pour déplacer essentiellement verticalement l'élément (4) sur le bras pousseur (32).

4. Système d'enlèvement du fumier selon la revendication 3, **caractérisé en ce que** les moyens pour déplacer essentiellement verticalement sont constitués par des éléments de guidage (34, 43) s'engrenant l'un dans l'autre disposés sur l'élément en forme de râteau (4) et le bras pousseur (32).

5. Système d'enlèvement du fumier selon la revendication 4, **caractérisé en ce que** les éléments de guidage sont constitués par des trous allongés (43) placés sur l'élément en forme de râteau (4) ou sur le bras pousseur (32) et de broches de guidage (34) placées sur le bras pousseur (32) ou sur l'élément en forme de râteau (4).

6. Système d'enlèvement du fumier selon l'une des revendications précédentes, **caractérisé en ce qu'**un mécanisme de déclenchement est prévu pour ajuster l'élément en forme de râteau (4) de la première position dans la deuxième position juste avant le rabattement du bras pousseur (32).

7. Système d'enlèvement du fumier selon la revendication 6, **caractérisé en ce que** le mécanisme de déclenchement est muni de rampes (12) placées dans les rainures (11) peu avant le changement de direction de déplacement du mouvement transportant vers l'avant du pousseur (3) vers le mouvement de retour, avec lesquelles rampes les dents (42) et par conséquent l'élément (4) sont soulevés dans las deuxième position.

8. Système d'enlèvement du fumier selon la revendication 6 ou 7, **caractérisé en ce que** des moyens sont prévus pour bloquer l'élément en forme de râteau (3) dans la deuxième position.

9. Système d'enlèvement du fumier selon la revendication 8, **caractérisé en ce que** les moyens pour bloquer sont munis d'une saillie (44) sur l'élément en forme de râteau qui en deuxième position soulevée prend appui sur un contre-palier fixe placé sur l'élément central (31), et ce déjà dans une position légèrement rabattue du bras pousseur.

10. Système d'enlèvement du fumier selon l'une des revendications 5 et 9, **caractérisé en ce que** pour la dernière partie du mouvement, directement avant d'atteindre la deuxième position, les trous allongés (43) sont orientés obliquement par rapport à l'axe de pivotement du bras pousseur (32) pour créer une composante de déplacement latéral dirigée vers l'élément central (31) de l'élément en forme de râteau (4).

11. Système d'enlèvement du fumier selon la revendication 8, 9 ou 10, **caractérisé en ce que** une libération des moyens pour bloquer (44, 45) l'élément en forme de râteau (4) dans la deuxième position est prévue lors du déploiement automatique du bras pousseur (32).

12. Système d'enlèvement du fumier selon l'une des revendications précédentes, **caractérisé en ce que** le pousseur de fumier (3) est muni de deux bras pousseurs (32) articulés des deux côtés de l'élément central (31).

13. Système d'enlèvement du fumier selon l'une des revendications précédentes, **caractérisé en ce que** les rainures (11) du couloir à rainures (1) sont renforcées par des profilés en U, de préférence en acier.

14. Procédé de travail avec un système d'enlèvement du fumier selon l'une des revendications 1 à 13, **caractérisé par** les étapes suivantes :
- transport du fumier avec le pousseur de fumier déployé dans la direction de transport, les rainures du couloir à rainures étant grattées/nettoyées par les dents (première position) pénétrant dedans ;
- soulèvement des dents pénétrant dans les rainures dans une deuxième position avant inversement du sens du mouvement du pousseur ;
- inversement du sens de déplacement du pousseur, le/les bras pousseur(s) commençant à se rabattre en raison de l'appui sur le sol du couloir ;
- blocage des dent dans la deuxième position et rabattement complet du/des bras pousseur(s) ;
- déplacement de retour du pousseur en position rabattu jusqu'à l'autre bout du couloir ;
- inversion du sens de déplacement du pousseur du mouvement de retour vers le mouvement de transport, le/les bras pousseur(s) se déployant en position de transport en raison de l'appui sur le sol du couloir ;
- libération du blocage des dents soulevées (deuxième position), les dents pénétrant dans les rainures sous l'effet de la gravité lors du déploiement complet du/des bras pousseur(s), et nouveau transport du fumier selon la première étape.
